# EUROPÄISCHE PATENTSCHRIFT

(11) **EP 2 335 028 B1**
(45) Veröffentlichungstag und Bekanntmachung des Hinweises auf die Patenterteilung: **21.08.2013**
(21) Anmeldenummer: 09782388.4
(22) Anmeldetag: 31.08.2009
(51) Int. Cl.: G01D 5/347

(54) **MULTITURN-DREHGEBER**
MULTITURN ROTARY ENCODER
CAPTEUR DE ROTATION MULTITOUR

(30) Priorität: 09.10.2008 DE 102008051083
(43) Veröffentlichungstag der Anmeldung: 22.06.2011
(73) Patentinhaber: Dr. Johannes Heidenhain GmbH, 83301 Traunreut (DE)
(72) Erfinder: MAYER, Elmar, 83365 Nußdorf (DE); SCHÜRMANN, Thomas, 83026 Rosenheim (DE); WALTER, Michael, 84570 Polling (DE)
(86) Internationale Anmeldenummer: PCT/EP2009/061197
(87) Internationale Veröffentlichungsnummer: WO 2010/040601

(56) Entgegenhaltungen:
- WO-A1-2004/031695
- DE-A1- 19 820 014

## Beschreibung

Die Erfindung betrifft einen Multiturn-Drehgeber nach dem Oberbegriff von Anspruch 1. Insbesondere betrifft die Erfindung die Schnittstellen-Architektur zur Übertragung von Umdrehungsdaten zur Ermittlung der Anzahl der zurückgelegten Umdrehungen einer Welle von einer Multiturn-Einheit zu einer Auswerteeinheit.

Multiturn-Drehgeber werden in der Antriebstechnik dazu verwendet, die Position, sowie die Anzahl zurückgelegter Umdrehungen einer Welle zu messen. Derartige Multiturn-Drehgeber sind im Stand der Technik seit langem bekannt. Sie bestehen meist aus einer ersten Maßverkörperung, aus deren Abtastung eine Information über die Position der Welle innerhalb einer vollen Umdrehung gewonnen wird, und einer oder mehreren weiteren Maßverkörperungen, deren Abtastung Positionsinformationen über die Anzahl der zurückgelegten Umdrehungen der Welle liefern.

Die Einheiten zur Positionsbestimmung innerhalb einer Umdrehung der Welle werden unter dem Begriff "Singleturn-Stufe" zusammengefasst. Die Einheiten zur Ermittlung von Positionsinformationen bezüglich der Anzahl der zurückgelegten Umdrehungen der Welle bilden eine Multiturn-Einheit. Aus den Positionsinformationen der Singleturn-Stufe und der Multiturn-Einheit wird in einer Auswerteeinheit ein gemeinsamer Positionswert gebildet, der sowohl die Anzahl bisher zurückgelegter ganzer Umdrehungen, als auch die absolute Position innerhalb der aktuellen Umdrehung beinhaltet.

In modernen Positionsmessgeräten kommt als Auswerteeinheit häufig ein hochintegrierter anwendungsspezifischer Baustein (ASIC) zum Einsatz, der im Idealfall bereits die Detektoren für die Abtastung der Singleturn-Stufe, sowie die benötigten Schaltungsteile zur Verarbeitung der Detektorsignale zum Positionswert beinhaltet. Wird ein optisches Abtastprinzip verwendet, handelt es sich bei den Detektoren beispielsweise um ein Photodetektorarray. In dieser Kombination spricht man auch von einem Opto-ASIC.

Zur Abtastung der zweiten Maßverkörperungen in der Multiturn-Einheit sind separate Abtasteinheiten vorgesehen, die Positionswerte in absoluter Form generieren. Die Multiturn-Einheit eines typischen Multiturn-Drehgebers weist beispielsweise drei Multiturn-Stufen auf, die über ein dreistufiges Getriebe mit festem Übersetzungsfaktor angetrieben werden. Als Maßverkörperungen können axial auf Getriebezahnrädern aufgebrachte Magnete dienen, die je mittels eines Hallsensors abgetastet werden, der die Winkelstellung des zugeordneten Getriebezahnrads als Absolutwert mit beispielsweise 8 Bit Auflösung ausgibt. Diese Absolutwerte werden über digitale Schnittstellen zur Auswerteeinheit übertragen. Ein derartiger Multiturn-Drehgeber ist beispielsweise in der EP1076809B1 beschrieben.

Weiter sind Multiturn-Drehgeber bekannt, deren Multiturn-Einheit einen Zähler aufweist, der von Zählimpulsen, die bei jeder vollständigen Umdrehung der Welle erzeugt werden, inkrementiert bzw. dekrementiert wird. Der Zählwert gibt in diesem Fall direkt die Anzahl der zurückgelegten Umdrehungen der Welle wieder. Eine typische Datenwortbreite des Zählwertes ist 18 Bit.
Für die Datenübertragung von der Multiturn-Einheit zur Auswerteeinheit wurden bisher bevorzugt parallele Schnittstellen eingesetzt, da diese einfach zu realisieren sind und hohe Datenübertragungsraten erreichen. Nachteilig an dieser Lösung ist die hohe Anzahl benötigter Signalleitungen. So erfordert die oben beschriebene dreistufige Anordnung allein 24 Leitungen zur Übertragung der drei 8-Bit breiten Datenwörter. Dazu kommen noch diverse Steuerleitungen. Das ist besonders dann problematisch, wenn als Auswerteeinheit ein ASIC, bzw. Opto-ASIC eingesetzt werden soll, da die Anzahl der benötigten Anschlusspads direkt die Chipfläche und damit die Kosten pro ASIC beeinflusst.

Der Einsatz von seriellen Schnittstellen erweist sich ebenfalls als problematisch, da einfache serielle Schnittstellen, die mit geringem Aufwand in einen ASIC zu implementieren sind, für anspruchsvolle Positionsmessgeräte, beispielsweise zur Messung von Hochgeschwindigkeitsspindeln, meist zu langsam sind und schnelle serielle Schnittstellen großen Schaltungsaufwand erfordern und sich somit wiederum negativ auf die benötigte Chipfläche auswirken und zu erhöhten Kosten führen. Darüber hinaus erfordern schnelle serielle Schnittstellen eine hohe Taktfrequenz mit steilen Taktflanken, die Probleme durch Übersprechen auf die Signalverarbeitung, insbesondere der Singleturn-Stufe, hervorrufen können und aufgrund der benötigten Treiberstärke der Pads zu hohem Stromverbrauch führen.

Es ist daher Aufgabe der Erfindung, einen Multiturn-Drehgeber anzugeben, der eine verbesserte Schnittstellenarchitektur aufweist.

Diese Aufgabe wird gelöst durch einen Multiturn-Drehgeber nach Anspruch 1. Vorteilhafte Details des Multiturn-Drehgebers ergeben sich aus den von Anspruch 1 abhängigen Ansprüchen.

Es wird nun ein Multiturn-Drehgeber vorgeschlagen, mit einer Singleturn-Codescheibe, die drehfest mit einer Welle verbunden ist und die eine Codespur aufweist, die zur Ermittlung der absoluten Position innerhalb einer Umdrehung der Welle von einer Singleturn-Abtasteinheit abtastbar ist, einer Multiturn-Einheit zur Messung von Umdrehungsdaten, die zur Ermittlung der Anzahl der zurückgelegten Umdrehungen der Welle geeignet sind und einer Auswerteeinheit, die über wenigstens zwei digitale Schnittstellen zur Übertragung der Umdrehungsdaten mit der Multiturn-Einheit verbunden ist. Die Erfindung ist dadurch gekennzeichnet, dass die Umdrehungsdaten wenigstens zwei Datenwörter umfassen, die bei Drehung der Welle eine unterschiedliche Änderungsgeschwindigkeit aufweisen, dass die Schnittstelle zur Übertragung des Datenworts mit der höchsten Änderungsgeschwindigkeit zur Auswerteeinheit eine parallele Schnittstelle ist und dass die Schnittstelle zur Übertragung des Datenworts mit der niedrigsten Änderungsgeschwindigkeit zur Auswerteeinheit eine serielle Schnittstelle ist.

Die serielle Schnittstelle kann sowohl als Punkt-zu-Punkt-Verbindung, als auch als Busverbindung ausgeführt sein, wobei die Busverbindung durch die damit verbundene Einsparung weiterer Pins an der Auswerteeinheit besonders vorteilhaft ist.

Die Vorteile der vorliegenden Erfindung wirken sich besonders stark aus, wenn als Auswerteeinheit ein ASIC zum Einsatz kommt, da hier durch die Reduzierung der Anzahl benötigten Anschlusspins ohne signifikante Erhöhung der Chipfläche ein optimales Kosten/Nutzen-Verhältnis erreicht wird.

Weitere Vorteile sowie Einzelheiten der vorliegenden Erfindung ergeben sich aus der nachfolgenden Beschreibung anhand der Figuren. Dabei zeigt
- Figur 1: einen prinzipiellen Aufbau eines ersten Ausführungsbeispiels eines erfindungsgemäßen Multiturn-Drehgebers,
- Figur 2: ein Blockschaltbild mit einer erfindungsgemäßen Schnittstellenarchitektur zum ersten Ausführungsbeispiel,
- Figur 3: ein Blockschaltbild einer weiteren erfindungsgemäßen Schn ittstellenarchitektu r,
- Figur 4: einen prinzipiellen Aufbau eines zweiten Ausführungsbeispiels eines erfindungsgemäßen Multiturn-Drehgebers und
- Figur 5: ein Blockschaltbild mit einer Schnittstellenarchitektur zum zweiten Ausführungsbeispiel.

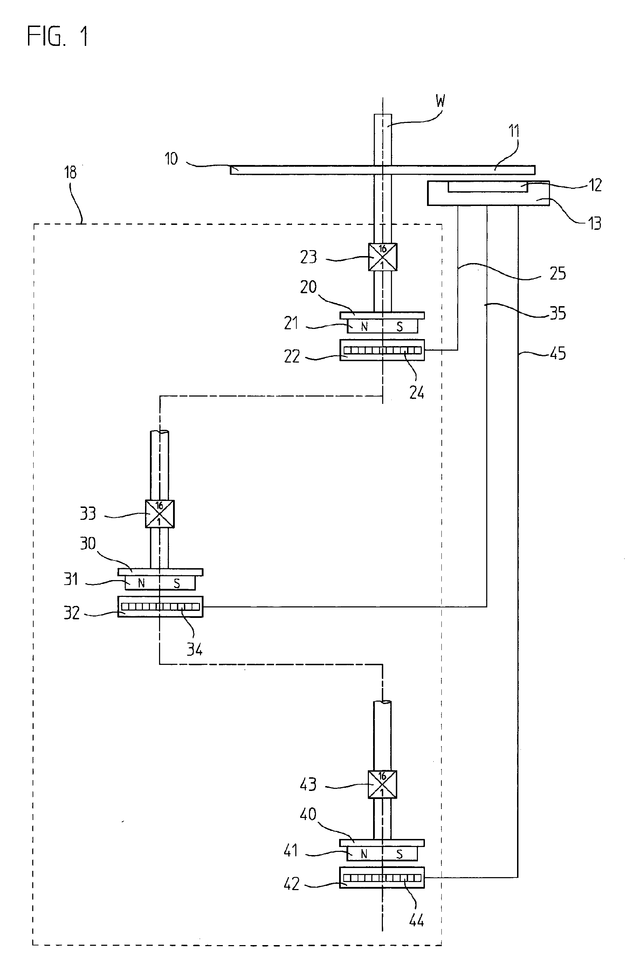

Figur 1 zeigt den prinzipiellen Aufbau eines ersten Ausführungsbeispiels eines erfindungsgemäßen Multiturn-Drehgebers. Die Singleturn-Stufe, also die Vorrichtung zur Messung des Positionswertes innerhalb einer Umdrehung einer Welle W, besteht aus einer Singleturn-Codescheibe 10, deren Mittelpunkt M drehfest mit der zu messenden Welle verbunden ist und eine konzentrisch zum Mittelpunkt M angeordnete ringförmige Codespur 11 trägt. Ferner ist zum Ablesen der Codespur 11 und zur Ermittlung des absoluten Positionswertes entsprechend der Winkelstellung der Singleturn-Codescheibe 10 eine Singleturn-Abtasteinheit 12 vorgesehen. Wird zur Positionserfassung das optische Abtastprinzip eingesetzt, besteht die Codespur 11 beispielsweise aus einem Strichmuster aus Bereichen mit verschiedenen optischen Eigenschaften, beispielsweise lichtdurchlässig/lichtundurchlässig, oder reflektierend/nicht reflektierend. Licht aus einer Lichtquelle wird in Richtung der Codespur 11 ausgesandt, von dieser moduliert und trifft schließlich auf Photodetektoren, die in der Singleturn-Abtasteinheit 12 angeordnet sind. Auf die Darstellung einer Lichtquelle wurde hier aus Gründen der Übersichtlichkeit verzichtet. Die Codespur 11 kann absolut codiert oder/und inkremental ausgeführt sein und gegebenenfalls aus mehreren, nebeneinander angeordneten Teilungsspuren bestehen.

Zur Messung von Umdrehungsdaten, die zur Ermittlung der Anzahl der zurückgelegten Umdrehungen der Welle W geeignet sind, ist eine Multiturn-Einheit 18 vorgesehen. Sie besteht im dargestellten Beispiel aus drei Multiturn-Stufen. Jede dieser Multiturn-Stufen umfasst eine Multiturn-Codescheibe 20, 30, 40 mit je einem Codeelement 21, 31, 41, sowie eine Multiturn-Abtasteinheit 22, 32, 42. Die Umdrehungsdaten sind Datenwörter 24, 34, 44, die in den Multiturn-Abtasteinheiten 22, 32, 42 ermittelt werden. Die Multiturn-Codescheiben 20, 30, 40 werden von der zu messenden Welle W über ein dreistufiges Untersetzungsgetriebe 23, 33, 43 angetrieben, wobei bei Drehung der Welle W die erste Multiturn-Codescheibe 20, die von der ersten Getriebestufe 23 angetrieben wird, die höchste und die dritte Multiturn-Codescheibe 40, die von der dritten und zugleich letzten Getriebestufe 43 angetrieben wird, die niedrigste Drehzahl aufweist. Entsprechend haben die in den Multiturn-Abtasteinheiten 22, 32, 42 erzeugten Datenwörter 24, 34, 44 unterschiedliche Änderungsgeschwindigkeiten, das erste Datenwort 24 der ersten Multiturn-Stufe hat die höchste, das dritte Datenwort 44 der dritten und zugleich letzten Multiturn-Stufe die niedrigste Änderungsgeschwindigkeit.

Einen besonders einfachen Aufbau der Multiturn-Stufen erhält man, wenn hierfür ein magnetisches Abtastprinzip eingesetzt wird. In diesem Fall bestehen die Codeelemente 21, 31, 41 aus scheibenförmigen Permanentmagneten, die mit den Multiturn-Codescheiben 20, 30, 40 drehfest verbunden sind und die je einen Dipol, d.h. einen magnetischen Nordpol N und Südpol S aufweisen. Besonders vorteilhaft ist es, als Multiturn-Codescheiben 20, 30, 40 geeignete Zahnräder des Untersetzungsgetriebes 23, 33, 43 zu verwenden. Die Abtastung der Dipole zur Ermittlung der Winkelposition der Codeelemente 21, 31, 41 erfolgt mittels in den jeweiligen Multiturn-Abtasteinheiten 22, 32, 42 angeordneten Hall-Sensoren. Die Auflösung der Multiturn-Abtasteinheiten 22, 32, 42 beträgt beispielsweise 8 Bit, d.h. eine Umdrehung der Multiturn-Codescheiben 20, 30, 40 wird mit 256 absoluten Positionswerten aufgelöst und in Form von Datenwörtern 24, 34, 44 bereitgestellt.

Ein derartig aufgebauter Multiturn-Drehgeber ist beispielsweise in der EP1076809B1 beschrieben.

Für die Auswertung der einzelnen Positionswerte der Singleturn-Stufe und der Multiturn-Stufen zur Bildung eines Gesamtpositionswertes ist eine Auswerteeinheit 13 vorgesehen. Bei der Auswerteeinheit 13 handelt es sich mit Vorteil um einen ASIC, auf dem die Singleturn-Abtasteinheit 12 bereits integriert ist. Wenn die Singleturn-Stufe, wie oben beschrieben, nach dem optischen Abtastprinzip aufgebaut ist und der ASIC auch die Detektoren für die Erfassung des von der Codespur 11 modulierten Lichts beinhaltet, wird der ASIC auch als Opto-ASIC bezeichnet. Die Datenwörter 24, 34, 44, die die absoluten Positionswerte der Multiturn-Stufen beinhalten, werden zur Auswerteeinheit 13, wie im Folgenden ausgeführt, über digitale Schnittstellen 25, 35, 45 übertragen.

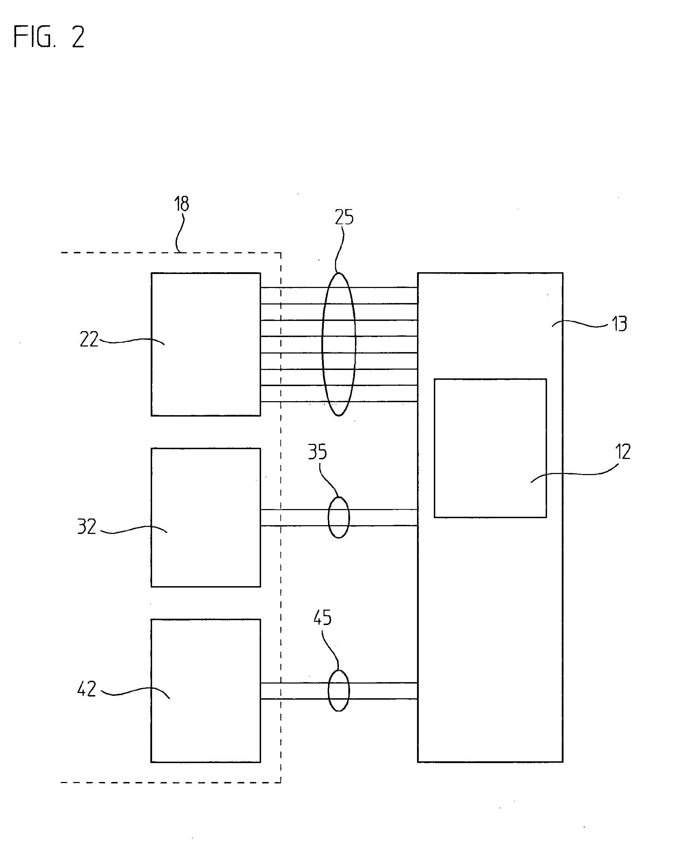

Figur 2 zeigt eine erfindungsgemäße Schnittstellen-Architektur zur Übertragung der Datenwörter 24, 34, 44 von der Multiturn-Einheit 18 zur Auswerteeinheit 13. Von der Multiturn-Einheit 18 sind vereinfacht nur die Multiturn-Abtasteinheiten 22, 32, 42 dargestellt, die über digitale Schnittstellen 25, 35, 45 mit der Auswerteeinheit 13 verbunden sind.

Zur Bildung eines Gesamtpositionswertes aus den einzelnen absoluten Positionswerten der Singleturnstufe und der drei Multiturnstufen ist es notwendig, diese zu verknüpfen. Dabei ist es besonders wichtig, dass die Vollendung einer vollständigen Umdrehung jeder der Codescheiben von der Codescheibe der nächstlangsameren Getriebestufe erkannt wird.

Für die weiteren Betrachtungen wird ein Übersetzungsfaktor von 1/16 für jede der drei Getriebestufen des Untersetzungsgetriebes 23, 33, 43 angenommen, d.h. die erste Getriebestufe 23 reduziert die Drehzahl der ersten Multiturn-Codescheibe 20 auf 1/16 der Drehzahl der zu messenden Welle W (bzw. der Singleturn-Codescheibe 10), die Drehzahl der zweiten Multiturn-Codescheibe 30 wird durch die zweite Getriebestufe 33 auf 1/16 der Drehzahl der ersten Getriebestufe 23 (bzw. der ersten Multiturn-Codescheibe 20) verringert und die Drehzahl der dritten Multiturn-Codescheibe 40 schließlich von der dritten und letzten Getriebestufe 43 auf 1/16 der Drehzahl der vorhergehenden zweiten Getriebestufe 33 (oder der zweiten Multiturn-Codescheibe 30) gebracht. Die Auflösung jeder Multiturn-Codescheibe 20, 30, 40 beträgt 8 Bit, wobei die vier höherwertigeren Bits (4..7) zum Zählen der Umdrehungen und die vier niederwertigeren Bits (0..3), die sich mit den vier höherwertigeren Bits (4..7) der vorhergehenden Getriebestufe mit der nächsthöheren Drehzahl überlappen, für den sogenannten Codeanschluss verwendet werden, um eine korrekte Verknüpfung der einzelnen absoluten Positionswerte der Singleturnstufe und der drei Multiturnstufen zum Gesamtpositionswert zu ermöglichen. Somit ergibt sich ein maximaler Zählbereich von 4096 Umdrehungen. Als maximale Drehzahl der zu messenden Welle W werden 18000 U/min angenommen.

Entsprechend den Drehzahlen der Multiturn-Codescheiben 20, 30, 40 weisen die in den Multiturn-Abtasteinheiten 22, 32, 42 erzeugten Datenwörter 24, 34, 44 bei Drehung der Welle W unterschiedliche Änderungsgeschwindigkeiten auf. Das in der ersten Multiturn-Abtasteinheit 20 erzeugte erste Datenwort 24 hat die höchste, das in der zweiten Multiturn-Abtasteinheit 30 erzeugte zweite Datenwort 34 eine mittlere und das in der dritten Multiturn-Abtasteinheit 40 erzeugte dritte Datenwort 44 die niedrigste Änderungsgeschwindigkeit.

Entscheidend für die Anschlusssicherheit ist es, dass die Positionswerte der Auswerteeinheit 13 zeitnah zur Verfügung stehen. Während diese Anforderung von parallelen Schnittstellen problemlos zu erfüllen ist, kann die Verwendung von seriellen Schnittstellen zur Übertragung der Datenwörter 24, 34, 44 von den Multiturn-Abtasteinheiten 22, 32, 42 zur Auswerteeinheit 13 problematisch sein.

### Hierzu ein Zahlenbeispiel:

Die Schnittstellen 25, 35, 45 zur Übertragung der Datenwörter 24, 34, 44 von den Multiturn-Abtasteinheiten 22, 32, 42 zur Auswerteeinheit 13 sollen eine Übertragungsfrequenz von 200 kHz aufweisen. Dies entspricht einem typischen Wert der weitverbreiteten 12C-Schnittstelle, die als 2-Draht-Schnittstelle besonders für die serielle Datenübertragung zwischen integrierten Schaltkreisen auf kurze Distanzen geeignet ist und einfach in derartige Schaltkreise zu implementieren ist.

Diese Schnittstellen 25, 35, 45 benötigen zur Übertragung eines 8-Bit Wertes wenigstens 40 us (zusätzlich zu übertragende Bits wie Start- bzw. Stoppbits bleiben bei dieser Betrachtung unberücksichtigt). Bezogen auf die Singleturn-Codescheibe 10 bedeutet das, dass diese bei maximaler Drehzahl während der Datenübertragung einen Winkelwert von 4,32° überstreicht. Das heißt, drehzahlabhängig ändert sich die Winkelposition der Singleturn-Codescheibe 10 während der Übertragung des ersten Datenwortes 24 von der ersten Multiturn-Abtasteinheit 22 zur Auswerteeinheit 13 zwischen 0° bei Stillstand der Welle und 4,32° bei maximaler Drehzahl. Dies hat eine erhebliche Reduzierung der Anschlusssicherheit zur Folge.

Betrachtet man die zweite Multiturnstufe, so stellt sich heraus, dass sich die Winkelposition der ersten Multiturn-Codescheibe 20 während der Übertragung des zweiten Datenwortes 34 von der zweiten Multiturn-Abtasteinheit 32 über die zweite Schnittstelle 35 zur Auswerteeinheit 13 bei maximaler Drehzahl der Welle W maximal um lediglich 0,27° verändert. Dieser Wert kann in Bezug auf die Anschlusssicherheit bereits in vielen Fällen vernachlässigt werden.

Für die dritte Multiturnstufe ergibt sich eine maximale Abweichung der Winkelposition der zweiten Multiturn-Codescheibe 30 von nur 0,017°, die keinen Einfluss auf die Anschlusssicherheit mehr hat.

Zusammenfassend lässt sich also feststellen, dass die Übertragungsgeschwindigkeit einer einfachen, leicht zu implementierenden seriellen Schnittstelle zur Übertragung von absoluten Positionswerten von der dritten Multiturn-Abtasteinheit 42 zur Auswerteeinheit 13 ausreicht und zumindest hier auf eine in Bezug auf die benötigten Anschlusspins aufwändige parallele Schnittstelle verzichtet werden kann.

In diesem Beispiel ist auch für die Übertragung des zweiten Datenwortes 34 von der zweiten Multiturn-Abtasteinheit 32 zur Auswerteeinheit 13 eine serielle Schnittstelle noch geeignet. Für die Datenübertragung von der ersten Multiturn-Abtasteinheit 22, deren zugeordnete erste Multiturn-Codescheibe 20 die höchste Drehzahl aufweist, zur Auswerteeinheit 13, ist diese serielle Schnittstelle wegen der Reduzierung der Anschlusssicherheit nicht mehr geeignet.

Die Implementierung einer schnelleren seriellen Schnittstelle ist jedoch, wie eingangs erwähnt, aus Gründen der benötigten kostenintensiven Chipfläche und der schaltungstechnischen Nachteile durch die erforderliche hohe Taktfrequenz nicht zielführend. Es wurde jedoch festgestellt, dass der Einsatz einer parallelen Schnittstelle als erste Schnittstelle 25 für die Datenübertragung zwischen der ersten Multiturn-Abtasteinheit 22 und der Auswerteeinheit 13 in Bezug auf die Anforderungen - Reduzierung der Chipfläche durch Reduzierung der Anzahl der benötigten Pins, sowie Einsatz von leicht zu implementierenden Schnittstellen - zum besten Kosten/Nutzen-Verhältnis führt. In diesem konkreten Beispiel erreicht man durch die Verwendung von einer parallelen und zwei seriellen Schnittstellen eine Reduzierung der für die Schnittstellen benötigten Pins von 24 (drei parallele Schnittstellen mit je 8 Bit unter Vernachlässigung von Steuerleitungen) auf 12 (zwei Pins je serieller Schnittstelle).

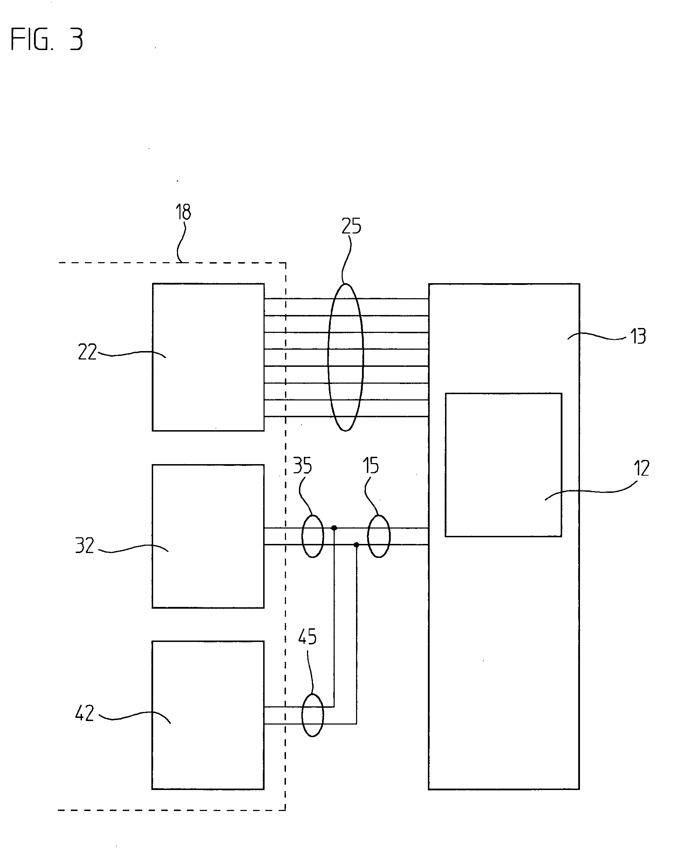

Die Anzahl der benötigten Pins lässt sich noch weiter reduzieren, wenn die seriellen Schnittstellen nicht, wie in Figur 2 dargestellt, als Punkt-zu-Punkt-Verbindungen realisiert werden, sondern, wie Figur 3 zeigt, als Busverbindung ausgeführt sind. Das bedeutet, dass in der Auswerteeinheit 13 lediglich eine gemeinsame serielle Schnittstelle 15 vorgesehen ist, an die die zweite Multiturn-Abtasteinheit 32 über die zweite Schnittstelle 35 und die dritte Multiturn-Abtasteinheit 42 über die dritte Schnittstelle 45 parallel angeschlossen sind. Dadurch erreicht man eine weitere Ersparnis von zwei Pins an der Auswerteeinheit 13. Folge davon ist jedoch eine weitere Reduzierung der Übertragungsgeschwindigkeit, da für die Übertragung der absoluten Positionsdaten der zweiten, bzw. dritten Multiturn-Abtasteinheit 32, 42 zuerst eine Adressierungsinformation von der Auswerteeinheit 13 übertragen werden muss, um zu definieren, welche der Multiturn-Abtasteinheiten 32, 42 gerade angesprochen, bzw. ausgelesen werden soll. Außerdem erfolgt das Auslesen der Positionsdaten aus den Multiturn-Abtasteinheiten 32, 42 sequentiell.

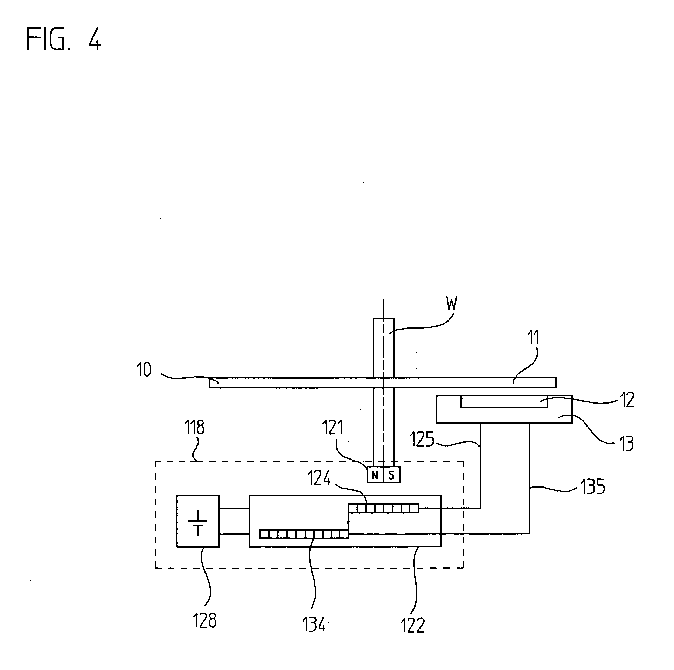

Figur 4 zeigt den prinzipiellen Aufbau eines zweiten Ausführungsbeispiels eines erfindungsgemäßen Multiturn-Drehgebers. Der Aufbau der Singleturn-Stufe entspricht dem der bereits im Zusammenhang mit Figur 1 beschriebenen Singleturn-Stufe. Im Gegensatz zum ersten Ausführungsbeispiel umfasst die Multiturn-Einheit 118 jetzt lediglich eine Multiturn-Abtasteinheit 122, die Umdrehungsdaten in Form eines Zählerwertes, beispielsweise mit 18 Bit Datenwortbreite, ermittelt. Ein Untersetzungsgetriebe ist in diesem Beispiel nicht vorgesehen. Zur Erzeugung eines Zählimpulses je Umdrehung der Welle W ist an dieser beispielsweise ein Codeelement 121, bestehend aus einem scheibenförmigen Permanentmagneten, angeordnet, das mittels Magnetsensoren (nicht dargestellt) abgetastet wird. Besonders geeignet sind hierfür Sensoren, die auf dem magneto-resistiven Effekt basieren (sog. MR-Sensoren). Eine vorteilhafte Anordnung ergibt sich, wenn zwei MR-Sensoren um 90° versetzt über den Umfang des Codeelements 121 verteilt angeordnet sind. Die Multiturn-Abtasteinheit 122 leitet aus den Sensorsignalen drehrichtungsabhängige Zählimpulse ab und inkrementiert bzw. dekrementiert den Zählerwert entsprechend.

Selbstverständlich ist die Erzeugung von Zählimpulsen nicht auf ein magnetisches Abtastprinzip beschränkt. So können beispielsweise auch optische oder induktive Abtastprinzipien zum Einsatz kommen.

Durch die Erzeugung und drehrichtungsabhängige Auswertung eines Zählimpulses pro Umdrehung der Welle W gibt der Zählerwert zu jedem Zeitpunkt direkt die Anzahl der zurückgelegten Umdrehungen der Welle W wieder. Damit nach dem Ausschalten, bzw. einem Ausfall der Versorgungsspannung des Multiturn-Drehgebers der Zählerwert nicht verloren geht, ist in der Multiturn-Einheit 118 weiter eine Batterie 128 angeordnet, die die erforderliche elektrische Energie zur Erhaltung des Zählerwertes bereitstellt.

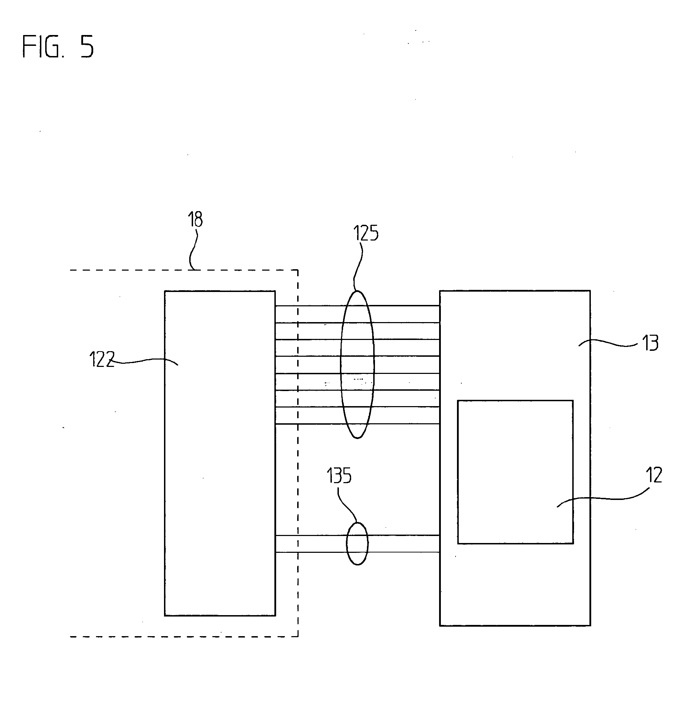

Der Zählerwert ist nun in zwei Datenworte 124, 134 aufgeteilt, wobei ein erstes Datenwort 124 niederwertigere Bits des Zählerwerts und ein zweites Datenwort 134 höherwertigere Bits des Zählerwerts umfasst. Beim Drehen der Welle W weist nun das erste Datenwort 124 die höchste und das zweite Datenwort 134 die niedrigste Änderungsgeschwindigkeit der beiden Datenworte 124, 134 auf. Die Übertragung des ersten Datenwortes 124 zur Auswerteeinheit 13 erfolgt über eine erste Schnittstelle 125, die Übertragung des zweiten Datenwortes 135 über eine zweite Schnittstelle 135. Erfindungsgemäß handelt es sich, wie auch in Figur 5 dargestellt, bei der ersten Schnittstelle 125 um eine parallele Schnittstelle und bei der zweiten Schnittstelle 135 um eine serielle Schnittstelle.

Im Hinblick auf die Reduzierung der für die Datenübertragung zur Auswerteeinheit 13 benötigten Anschlusspins ist es anzustreben, möglichst viele, mit Vorteil wenigstens die Hälfte der Bits des Zählerwerts über eine serielle Schnittstelle zu übertragen. Eine bevorzugte Aufteilung eines Zählerwerts mit 18 Bit Datenwortbreite ist die Verwendung der acht niederwertigeren Bits (0..7) als erstes Datenwort 124 und der zehn höherwertigeren Bits (8..17) als zweites Datenwort 134. In Abhängigkeit von der maximalen Drehzahl der Welle W und der Datenübertragungsgeschwindigkeit der verwendeten zweiten Schnittstelle 135, also der seriellen Schnittstelle, kann die Datenwortbreite des ersten Datenwortes 124 ggf. weiter reduziert werden, was wiederum die Anzahl der benötigten Leitungen von der Auswerteeinheit 13 zur Multiturn-Einheit 118 weiter verringert. Als Sonderfall kann als erstes Datenwort 124 lediglich das niederwertigste Bit (LSB) des Zählerwertes verwendet werden. In diesem Fall reduziert sich die erste Schnittstelle 125 auf nur eine Leitung.

Die vorliegende Erfindung ist geeignet für Multiturn-Drehgeber, die eine Multiturn-Einheit 18, 118 umfassen, in der Umdrehungsdaten erzeugt werden, mit deren Hilfe in einer Auswerteeinheit 13 die Anzahl der zurückgelegten Umdrehungen einer Welle W ermittelbar ist und die zu diesem Zweck über digitale Schnittstellen 25, 35, 45, 125, 135 zur Auswerteeinheit 13 übertragen werden.

## Patentansprüche

1. Multiturn-Drehgeber mit
- einer Singleturn-Codescheibe (10), die drehfest mit einer Welle (W) verbunden ist und die eine Codespur (11) aufweist, die zur Ermittlung der absoluten Position innerhalb einer Umdrehung der Welle (W) von einer Singleturn-Abtasteinheit (12) abtastbar ist,
- einer Multiturn-Einheit (18, 118) zur Messung von Umdrehungsdaten, die zur Ermittlung der Anzahl der zurückgelegten Umdrehungen der Welle (W) geeignet sind,
- einer Auswerteeinheit (13), die über wenigstens zwei digitale Schnittstellen (25, 35, 45, 125, 135) zur Übertragung der Umdrehungsdaten mit der Multiturn-Einheit (18, 118) verbunden ist,
**dadurch gekennzeichnet, dass**
die Umdrehungsdaten wenigstens zwei Datenwörter (24, 34, 44, 124, 134) umfassen, die bei Drehung der Welle (W) eine unterschiedliche Änderungsgeschwindigkeit aufweisen und die Schnittstelle (25, 35, 45, 125, 135) zur Übertragung des Datenworts mit der höchsten Änderungsgeschwindigkeit zur Auswerteeinheit (13) eine parallele Schnittstelle ist und die Schnittstelle (25, 35, 45, 125, 135) zur Übertragung des Datenworts mit der niedrigsten Änderungsgeschwindigkeit zur Auswerteeinheit (13) eine serielle Schnittstelle ist.

2. Multiturn-Drehgeber nach Anspruch 1, **dadurch gekennzeichnet, dass** die serielle Schnittstelle als Punkt-zu-Punkt-Verbindung ausgeführt ist.

3. Multiturn-Drehgeber nach Anspruch 1, **dadurch gekennzeichnet, dass** die serielle Schnittstelle als Busverbindung ausgeführt ist.

4. Multiturn-Drehgeber nach einem der vorhergehenden Ansprüche, **dadurch gekennzeichnet, dass** die serielle Schnittstelle eine 2-Draht-Schnittstelle ist.

5. Multiturn-Drehgeber nach einem der vorhergehenden Ansprüche, **dadurch gekennzeichnet, dass** die Auswerteeinheit (13) ein ASIC ist.

6. Multiturn-Drehgeber nach Anspruch 5, **dadurch gekennzeichnet, dass** die Singleturn-Abtasteinheit (12) in der Auswerteeinheit (13) integriert ist.

7. Multiturn-Drehgeber nach Anspruch 6, **dadurch gekennzeichnet, dass** die Erzeugung der absoluten Position der Welle (W) auf einem optischen Abtastprinzip beruht und die Auswerteeinheit (13) ein Opto-ASIC ist.

8. Multiturn-Drehgeber nach einem der vorhergehenden Ansprüche, **dadurch gekennzeichnet, dass** die Multiturn-Einheit (18, 118) wenigstens zwei Multiturn-Codescheiben (20, 30, 40) mit Codeelementen (21, 31, 41), ein Untersetzungsgetriebe (23, 33, 43), das zwischen den Multiturn-Codescheiben (20, 30, 40) und der Welle (W) angeordnet ist, sowie Multiturn-Abtasteinheiten (22, 32, 42) zur Messung der absoluten Position der Multiturn-Codescheiben (20, 30, 40) durch Abtastung der Codeelemente (21, 31, 41) umfasst, wobei in den Multiturn-Abtasteinheiten (22, 32, 42) Umdrehungsdaten in Form von Datenwörtern (24, 34, 44) mit der absoluten Position der Multiturn-Codescheiben (20, 30, 40) erzeugbar sind.

9. Multiturn-Drehgeber nach einem der Ansprüche 1 bis 7, **dadurch gekennzeichnet, dass** die Multiturn-Einheit (18, 118) Umdrehungsdaten in Form eines Zählerwertes erzeugt, dessen niederwertigere Bits einem ersten Datenwort (124) und dessen höherwertigere Bits einem zweiten Datenwort (134) zugeordnet sind, wobei das erste Datenwort (124) das Datenwort mit der höchsten Änderungsgeschwindigkeit und das zweite Datenwort (134) das Datenwort mit der niedrigsten Änderungsgeschwindigkeit ist.

10. Multiturn-Drehgeber nach Anspruch 9, **dadurch gekennzeichnet, dass** die Multiturn-Einheit (18, 118) ein Codeelement (121), das an der Welle W angeordnet ist, sowie eine Multiturn-Abtasteinheit (122) zur Erzeugung des Zählerwertes umfasst und die Multiturn-Abtasteinheit (122) durch Abtastung des Codeelements (121) drehrichtungsabhängige Zählimpulse zum Inkrementieren bzw. Dekrementieren des Zählerwertes erzeugt.

## Claims

1. Multi-turn rotary encoder having
- a single-turn code disc (10) which is connected in a rotationally fixed fashion to a shaft (W) and has a code track (11) which can be scanned by a single-turn scanning unit (12) in order to determine the absolute position within a revolution of the shaft (W),
- a multi-turn unit (18, 118) for measuring revolution data which are suitable for determining the number of revolutions completed by the shaft (W), and
- an evaluation unit (13) which is connected to the multi-turn unit (18, 118) via at least two digital interfaces (25, 35, 45, 125, 135) for transmitting the revolution data,
**characterized in that**
the revolution data comprise at least two data words (24, 34, 44, 124, 134), which have a different rate of change during rotation of the shaft (W), and the interface (25, 35, 45, 125, 135) for transmitting the data word with the highest rate of change to the evaluation unit (13) is a parallel interface, and the interface (25, 35, 45, 125, 135) for transmitting the data word with the lowest rate of change to the evaluation unit (13) is a serial interface.

2. Multi-turn rotary encoder according to Claim 1, **characterized in that** the serial interface is designed as a point-to-point connection.

3. Multi-turn rotary encoder according to Claim 1, **characterized in that** the serial interface is designed as a bus connection.

4. Multi-turn rotary encoder according to one of the preceding claims, **characterized in that** the serial interface is a 2-wire interface.

5. Multi-turn rotary encoder according to one of the preceding claims, **characterized in that** the evaluation unit (13) is an ASIC.

6. Multi-turn rotary encoder according to Claim 5, **characterized in that** the single-turn scanning unit (12) is integrated in the evaluation unit (13).

7. Multi-turn rotary encoder according to Claim 6, **characterized in that** the generation of the absolute position of the shaft (W) is based on an optical scanning principle, and the evaluation unit (13) is an opto-ASIC.

8. Multi-turn rotary encoder according to one of the preceding claims, **characterized in that** the multiturn unit (18, 118) comprises at least two multiturn code discs (20, 30, 40) with code elements (21, 31, 41), a reduction gear (23, 33, 43) that is arranged between the multi-turn code discs (20, 30, 40) and the shaft (W), and multi-turn scanning units (22, 32, 42), for measuring the absolute position of the multi-turn code discs (20, 30, 40) by scanning the code elements (21, 31, 41), it being possible for revolution data to be generated in the multi-turn scanning units (22, 32, 42) in the form of data words (24, 34, 44) with the absolute position of the multi-turn code discs (20, 30, 40).

9. Multi-turn rotary encoder according to one of Claims 1 to 7, **characterized in that** the multiturn unit (18, 118) generates revolution data in the form of a counter value whose less significant bits are assigned to a first data word (124), and whose more significant bits are assigned to a second data word (134), the first data word (124) being the data word with the highest rate of change, and the second data word (134) being the data word with the lowest rate of change.

10. Multi-turn rotary encoder according to Claim 9, **characterized in that** the multi-turn unit (18, 118) comprises a code element (121) which is arranged on the shaft (W), and a multi-turn scanning unit (122) for generating the counter value, and by scanning the code element (121) the multi-turn scanning unit (122) generates counting pulses depending on the sense of rotation in order to increment or decrement the counter value.

## Revendications

1. Codeur rotatif multitours comprenant
- un disque de codage monotour (10) qui est attaché en rotation solidaire avec un arbre (W) et présente une piste de code (11), laquelle peut être palpée par une unité de palpage monotour (12) pour déterminer la position absolue à l'intérieur d'un tour de l'arbre (W),
- une unité multitours (18, 118) pour mesurer des données de tour qui conviennent pour déterminer le nombre de tours parcourus par l'arbre (W),
- une unité d'interprétation (13) qui est reliée avec l'unité multitours (18, 118) par le biais d'au moins deux interfaces numériques (25, 35, 45, 125, 135) pour la transmission des données de tour,
**caractérisé en ce que**
les données de tour comprennent au moins deux mots de données (24, 34, 44, 124, 134) qui présentent une vitesse de variation différente lors de la rotation de l'arbre (W) et l'interface (25, 35, 45, 125, 135) destinée à la transmission du mot de données ayant la vitesse de variation la plus élevée à l'unité d'interprétation (13) est une interface parallèle et l'interface (25, 35, 45, 125, 135) destinée à la transmission du mot de données ayant la vitesse de variation la plus faible à l'unité d'interprétation (13) est une interface série.

2. Codeur rotatif multitours selon la revendication 1, **caractérisé en ce que** l'interface série est réalisée sous la forme d'une liaison point à point.

3. Codeur rotatif multitours selon la revendication 1, **caractérisé en ce que** l'interface série est réalisée sous la forme d'une liaison de bus.

4. Codeur rotatif multitours selon l'une des revendications précédentes, **caractérisé en ce que** l'interface série est une interface à 2 fils.

5. Codeur rotatif multitours selon l'une des revendications précédentes, **caractérisé en ce que** l'unité d'interprétation (13) est un ASIC.

6. Codeur rotatif multitours selon la revendication 5, **caractérisé en ce que** l'unité de palpage monotour (12) est intégrée dans l'unité d'interprétation (13).

7. Codeur rotatif multitours selon la revendication 6, **caractérisé en ce que** la génération de la position absolue de l'arbre (W) se base sur un principe de palpage optique et l'unité d'interprétation (13) est un opto-ASIC.

8. Codeur rotatif multitours selon l'une des revendications précédentes, **caractérisé en ce que** l'unité multitours (18, 118) comprend au moins deux disques de codage multitours (20, 30, 40) munis d'éléments de codage (21, 31, 41), un engrenage démultiplicateur (23, 33, 43) qui est disposé entre les disques de codage multitours (20, 30, 40) et l'arbre (W) ainsi que des unités de palpage multitours (22, 32, 42) pour mesurer la position absolue des disques de codage multitours (20, 30, 40) en palpant les éléments de codage (21, 31, 41), des données de tour sous la forme de mots de données (24, 34, 44) pouvant être générées dans les unités de palpage multitours (22, 32, 42) avec la position absolue des disques de codage multitours (20, 30, 40).

9. Codeur rotatif multitours selon l'une des revendications 1 à 7, **caractérisé en ce que** l'unité multitours (18, 118) génère des données de tour sous la forme d'une valeur de compteur dont les bits de poids faible sont associés à un premier mot de données (124) et dont les bits de poids fort sont associés à un deuxième mot de données (134), le premier mot de données (124) étant le mot de données ayant la vitesse de variation la plus élevée et le deuxième mot de données (134) le mot de données ayant la vitesse de variation la plus faible.

10. Codeur rotatif multitours selon la revendication 9, **caractérisé en ce que** l'unité multitours (18, 118) comprend un élément de codage (121) qui est disposé sur l'arbre (W) ainsi qu'une unité de palpage multitours (122) pour générer la valeur de compteur et l'unité de palpage multitours (122) génère des impulsions de codage en fonction du sens de rotation pour incrémenter ou décrémenter la valeur de compteur en palpant l'élément de codage (121).
